# EUROPEAN PATENT APPLICATION

(11) **EP 3 342 933 A1**
(43) Date of publication of application: **04.07.2018**
(21) Application number: 15903110.3
(22) Date of filing: 16.09.2015
(51) Int. Cl.: E01D 19/02, E01D 21/00, F03D 13/20, E04H 12/02

(54) **PRECAST PANEL STRUCTURE AND METHOD FOR CONSTRUCTING SAME**

(30) Priority: 28.08.2015 KR 20150121481
(71) Applicant: POSCO, Nam-gu Pohang-si, Gyeongsangbuk-do 37859 (KR)
(72) Inventor: LEE, Dae-Yong, Incheon 21985 (KR)
(74) Representative: Potter Clarkson LLP
(86) International application number: PCT/KR2015/009754
(87) International publication number: WO 2017/039049

(57) **Abstract**

The present invention provides a precast panel structure formed by connecting a plurality of precast concrete panels in the circumferential direction, the precast panel structure comprising: a plurality of precast concrete panels having sections split in the circumferential direction; insertion rails, which are installed in inner end areas of the concrete panels in the height direction, and which are partially buried in the concrete panels; grout portions cast on connecting parts of the concrete panels so as to connect the concrete panels; and insertion space portions provided to be surrounded by the inner end areas of the concrete panels and by the insertion rails, thereby providing spaces in which inner cover portions for casting the grout portions are installed.

## Description

### [Technical Field]

The present disclosure relates to a precast panel structure for easily connecting precast concrete panels in a circumferential direction and a length direction thereof, and a method for manufacturing the same.

### [Background Art]

Disclosures made herein simply provide background information on the present disclosure, and does not constitute the related art.

As the sizes of bridges and wind turbines increase, the sizes of support structures thereof have also increased, in proportion to the bridge and wind turbine sizes.

In using concrete materials, advantageous in compression load resistance in support structures, hollow tubular structures are often being used to reduce the cross section and weight of such support structures. Further, precast concrete panel field assembling methods are being actively examined, instead of concrete field casting methods, to increase convenience in the transportation of large hollow tubular structures by road and to reduce construction periods in the field.

However, conventional methods using a hollow tubular structure may be accompanied by restrictions during transportation thereof. Generally, the maximum height of hollow structure units that may be transported in Korea is 4.2 m when low-bed trailers are used. Therefore, there may be restrictions on transporting large-scale structures, such as wind towers, having hollow structure units having a height of 8 m or higher.

Therefore, in order to improve convenience in transportation of large hollow tubular structures by road and to reduce construction periods in the field, precast concrete panel field assembly methods, in which the cross section of precast concrete panels is divided, have been actively studied, instead of concrete casting methods in the field.

To connect divided circular precast concrete panels in a circumferential direction thereof, in the related art, there has mainly been used a method of standing the respective precast panels in predetermined positions in a length direction thereof using cranes, fixing the precast panels using struts or the like, such that the precast panels may be supported, installing separate forms for concrete field casting and structures for fixation thereof, and pouring grout (or concrete) between two respective panels to fill a space therebetween, connecting the two panels.

However, this method may be disadvantageous in that it may be difficult to achieve required degrees of horizontal and vertical accuracy of precast panels in the construction site, while the need for a plurality of struts and multiple formwork may lead to a reduction of constructability and an increased construction period.

Furthermore, when precast concrete panels have an insufficient thickness, local failure of concrete around lifting jigs, crack destruction of central portions of precast concrete panels caused by the weight of the precast concrete panel, and the like, during transportation and installation of the precast concrete panels using cranes may occur.

The magnitude of these problems may further increase as the lengths and weights of unit precast concrete panels increase. Thus, there is a need for the development of technology for solving the problem.

### [Disclosure]

### [Technical Problem]

The present disclosure has been made in recognition of at least one of the requirements or problems occurring in the related art as described above.

An aspect of the present disclosure may provide a precast panel structure allowing precast concrete panels to be easily connected in a circumferential direction and in a length direction thereof.

An aspect of the present disclosure may provide a precast panel structure which may significantly reduce local failure of concrete around lifting jigs, or crack destruction of a central portion of a precast concrete panel caused by the weight of the precast concrete panel, during transportation and installation of the precast concrete panel using a crane.

### [Technical Solution]

According to an aspect of the present disclosure, a precast panel structure formed by connecting a plurality of precast concrete panels in a circumferential direction of the precast panel structure may include: the precast concrete panels each having sections split in the circumferential direction thereof; insertion rails installed in inner end areas of each of the precast concrete panels in a height direction of each of the precast concrete panels, in which portions of the insertion rails may be embedded in the precast concrete panel; grout portions cast in connecting parts of the precast concrete panels so as to connect the precast concrete panels; and insertion space portions provided to be surrounded by the inner end areas of the precast concrete panels and by the insertion rails, to provide spaces in which inner cover portions for casting the grout portions may be installed.

The precast concrete panels may include: precast concrete members each having sections split in the circumferential direction thereof; embedded reinforcing bars embedded inside the precast concrete members; and exposed reinforcing bars formed by portions of the embedded reinforcing bars exposed to the connecting parts of the precast concrete panels, in which the precast concrete panel may further include: connecting reinforcing bars installed in intersecting areas of the exposed reinforcing bars exposed to the connecting parts of the adjacent precast concrete panels in the height direction, and fixed to the exposed reinforcing bars.

Each of the insertion rails may include: a pair of rail members each having an upper flange, a web, and a lower flange, and each having a U-shaped section; and a connecting space portion by which the pair of rail members may be spaced apart by a predetermined interval, such that a connecting member is installed in the connecting space portion, in which each of the pair of rail members may include: an embedded rail having the upper flange and a portion of the web embedded in each of the precast concrete panels; and an exposed rail having the lower flange and a remainder of the web exposed from each of the precast concrete panels.

The insertion rails may have through holes formed in the embedded rail and the exposed rail to be spaced apart in the height direction.

Each of the insertion rails may include: a first through hole formed in the portion of the web included in the embedded rail, in which an embedded reinforcing bar, installed inside each of the precast concrete panels, may be installed through the first through hole; and a second through hole formed in the remainder of the web included in the exposed rail, in which a fastening member, fastening the connecting member installed in conjunction with the exposed rail, may be installed through the second through hole.

Insertion holes, spaced apart in the height direction, may be formed in outer end areas of the precast concrete panels.

The precast panel structure may further include: inner cover portions installed in the insertion space portions formed between the insertion rails of the connected precast concrete panels, and provided to support interiors of the connecting parts of the adjacent precast concrete panels; and outer cover portions fixed in insertion holes formed in outer end areas of the connected precast concrete panels by insertion bolts, and provided to support exteriors of the connecting parts of the precast concrete panels.

According to another aspect of the present disclosure, a precast tower structure may include: the precast panel structure provided as a plurality of precast panel structures stacked in a height direction; and metal connecting members installed across the adjacent insertion rails of the stacked precast panel structures to connect the precast panel structures in the height direction.

According to another aspect of the present disclosure, a method for manufacturing a precast panel structure formed by connecting a plurality of precast concrete panels, having sections split in a circumferential direction of the precast panel structure, in a circumferential direction of the precast concrete panels, may include: a panel placement step of placing the precast concrete panels in the circumferential direction of the precast panel structure; a form installation step of installing forms on exteriors and interiors of connecting parts of the connected precast concrete panels; a grout casting step of casting grout in the connecting parts; and a form detachment step of detaching the forms after the cast grout is bonded to the precast concrete panels, in which the form installation step may include: an inner form installation step of installing inner cover portions, supporting the interiors of the connecting parts, on insertion rails installed to be embedded in inner end areas of the connected precast concrete panels; and an outer form installation step of installing outer cover portions, supporting the exteriors of the connecting parts, by inserting insertion bolts in insertion holes formed in outer end areas of the connected precast concrete panels.

The panel placement step may include: a frame installation step of placing an installation frame inside the precast panel structure; a hinge coupling step of placing lower ends of the precast concrete panels on hinge members through hinge coupling, in the hinge members, may be installed on lower sides of the installation frame to be spaced apart in the circumferential direction; and a panel standing step of standing the precast concrete panels by winding tension members, installed in conjunction with the precast concrete panels and the installation frame, using driving means.

The installation frame may include: a frame body; the hinge members installed on the lower sides of the frame body to be spaced apart in the circumferential direction, in which the lower ends of the precast concrete panels may be hinge-coupled to the hinge members; pulley members installed on upper sides of the frame body; the tension members having one ends installed in conjunction with the precast concrete panels, and the other ends installed on the installation frame by the pulley members; and the driving means lifting the precast concrete panels by winding the tension members.

### [Advantageous Effects]

According to an exemplary embodiment in the present disclosure, precast concrete panels may be easily connected in a circumferential direction and a length direction thereof to improve constructability, thus reducing a construction period and construction costs.

According to an exemplary embodiment in the present disclosure, the load applied to precast concrete panels may be spread during transportation and installation of the precast concrete panels using a crane, thus significantly reducing local failure of a concrete member that may occur around a lifting jig, or crack destruction of central portions of the precast concrete panels caused by the weight of the precast concrete panels.

### [Description of Drawings]

FIG. 1 is a view illustrating a precast panel structure, according to an exemplary embodiment in the present disclosure;
FIGS. 2A and 2B are enlarged views of part A of FIG. 1;
FIG. 3 is a perspective view of a precast concrete panel employed in a precast panel structure, according to an exemplary embodiment in the present disclosure;
FIGS. 4A and 4B are enlarged views of part B of FIG. 3;
FIG. 5 is a perspective view of a connecting part of a precast panel structure, according to an exemplary embodiment in the present disclosure;
FIG. 6 is a view of a connecting part of a precast panel structure, according to an exemplary embodiment in the present disclosure, when viewed from the interior of the precast panel structure;
FIGS. 7 and 8 are views illustrating construction processes of a precast panel structure, according to an exemplary embodiment in the present disclosure;
FIG. 9 is a view illustrating a precast tower structure, according to an exemplary embodiment in the present disclosure; and
FIG. 10A is an enlarged view of part C of FIG. 9, while FIG. 10B is an enlarged view of part D of FIG. 9.

### [Best Mode for Invention]

Exemplary embodiments in the present disclosure will be described hereinafter with reference to the accompanying drawings. The disclosure may, however, be exemplified in many different forms and should not be construed as being limited to the specific embodiments set forth herein. Rather, these embodiments are provided so that this disclosure will be thorough and complete, and will fully convey the scope of the invention to those skilled in the art. The shapes or sizes of components illustrated in the drawings are exaggerated for clarity.

Hereinafter, a precast panel structure 10, according to an exemplary embodiment in the present disclosure, will be described in detail with reference to the drawings.

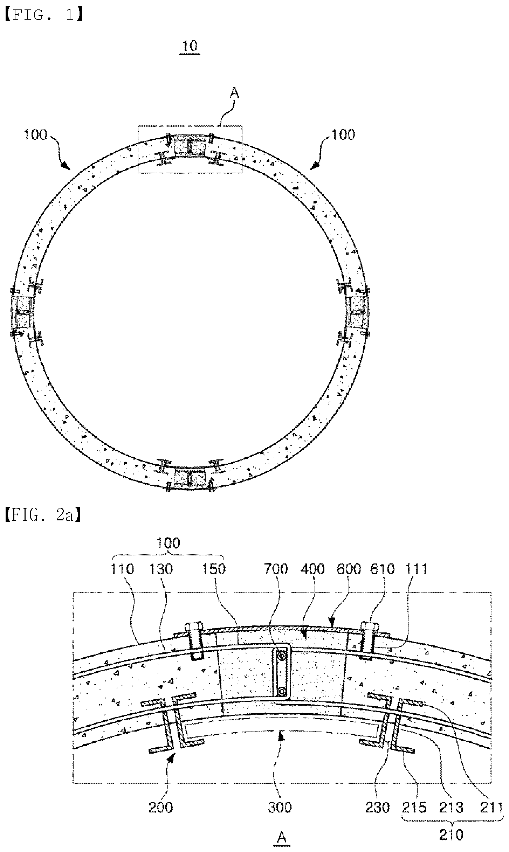

Referring to FIGS. 1 to 2B, the precast panel structure 10, according to an exemplary embodiment in the present disclosure, may include precast concrete panels 100, insertion rails 200, insertion space portions 300, and grout portions 400, and may further include inner cover portions 500 and outer cover portions 600.

The present disclosure relates to the precast panel structure 10 formed by connecting a plurality of precast concrete panels 100 in a circumferential direction of the precast panel structure 10.

Referring to FIG. 1, the precast panel structure 10 may include the precast concrete panels 100 each having sections split in the circumferential direction thereof, the insertion rails 200 installed in inner end areas of the precast concrete panels 100 in a height direction of the precast panel structure 10 and having portions embedded in the precast concrete panels 100, the grout portions 400 cast in connecting parts of the precast concrete panels 100 to connect the adjacent precast concrete panels 100, and the insertion space portions 300 provided to be surrounded by the inner end areas of the precast concrete panels 100 and by the insertion rails 200 to provide spaces in which the inner cover portions 500 for casting the grout portions 400 may be installed.

The precast concrete panels 100 may include precast concrete members 110, embedded reinforcing bars 130, and exposed reinforcing bars 150.

Referring to FIGS. 2A to 3, the precast concrete panels 100 may include the precast concrete members 110 each having sections split in the circumferential direction thereof, the embedded reinforcing bars 130 embedded inside the precast concrete members 110, and the exposed reinforcing bars 150 formed by portions of the embedded reinforcing bars 130 exposed to the connecting parts of the precast concrete panels 100.

The precast panel structure 10 may further include connecting reinforcing bars 700 installed in intersecting areas of the exposed reinforcing bars 150 exposed to the connecting parts of the adjacent precast concrete panels 100 in the height direction, and fixed to the exposed reinforcing bars 150.

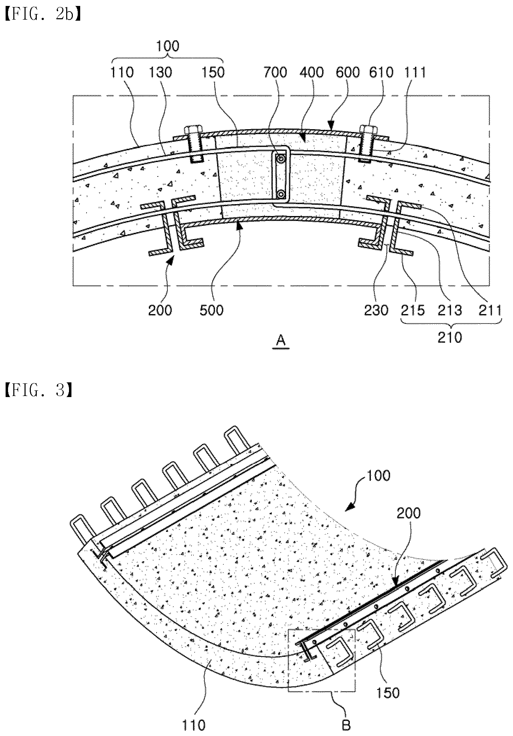

Referring to FIGS. 2A and 2B, insertion holes 111 may be formed in outer end areas of the precast concrete panels 100 to be spaced apart in the height direction.

Referring to FIGS. 2A and 2B, each of the insertion rails 200 may include a pair of rail members 210 and a connecting space portion 230.

The insertion rail 200 may include the pair of rail members 210 each having an upper flange 211, a web 213, and a lower flange 215 and having a U-shaped section, and the connecting space portion 230 in which the pair of rail members 210 may be spaced apart, such that a connecting member K may be installed.

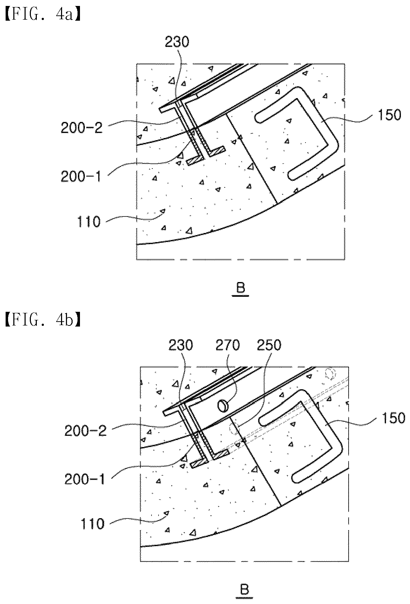

Referring to FIGS. 4A and 4B, each of the rail members 210 may include an embedded rail 200-1 having the upper flange 211 and a portion of the web 213 embedded in the precast concrete panel 100, and an exposed rail 200-2 having a remainder of the web 213 and the lower flange 215 exposed from the precast concrete panel 100.

The embedded rail 200-1 and the exposed rail 200-2, constituting the insertion rail 200, may be installed in a height direction of the precast concrete panel 100.

Here, the upper flange 211 and the lower flange 215 of the rail member 210 may be provided as flat plate-type members, but are not limited thereto, and may have a curved shape having a curvature corresponding to that of the precast concrete panel 100.

Further, through holes, spaced apart in the height direction, may be formed in at least the exposed rails 200-2 of the embedded rails 200-1 and the exposed rails 200-2 of the insertion rail 200.

The through hole may be formed in the exposed rail 200-2, and no through hole may be formed in the embedded rail 200-1.

The through holes, spaced apart in the height direction, may be formed in the exposed rails 200-2, and the connecting member K may be installed on the exposed rails 200-2 by fastening a bolt member to the through holes.

Since no through hole may be formed in the embedded rails 200-1, the embedded reinforcing bars 130, installed inside the precast concrete panel 100, may be bonded to the upper flanges 211 of the insertion rails 200 by a method, such as welding or the like, such that the embedded rails 200-1 may be integrally formed with the embedded reinforcing bars 130.

Referring to FIG. 4B, through holes, spaced apart in the height direction, may be formed in the embedded rails 200-1 and the exposed rails 200-2 of the insertion rails 200.

The precast concrete member 110 may be formed in the through holes formed in the embedded rails 200-1, and thus the precast concrete member 110 and the insertion rails 200 may be more robustly integrally formed.

As illustrated in FIG. 4B, the insertion rails 200 may include first through holes 250, which may be formed in the portions of the webs 213 of the embedded rails 200-1 and through which the embedded reinforcing bars 130, installed inside the precast concrete panel 100, may be installed to pass, and second through holes 270, which may be formed in the remainders of the webs 213 of the exposed rails 200-2 and through which a fastening member, fastening the connecting member K installed in conjunction with the exposed rails 200-2, may be installed to pass.

Referring to FIG. 4B, the embedded rails 200-1 and the exposed rails 200-2, forming the insertion rails 200, may be formed in the height direction of the precast concrete panel 100, and a plurality of through holes may be formed in the webs 213 of the embedded rails 200-1 and the exposed rails 200-2 to be spaced apart in the height direction.

The embedded reinforcing bars 130, installed inside the precast concrete panel 100, may be installed to pass through the first through holes 250, and thus the embedded reinforcing bars 130 and the embedded rails 200-1 may be integrally formed.

Here, the diameter of the first through holes 250 may be greater than that of the embedded reinforcing bars 130.

In this case, the precast concrete member 110 may be formed between the installed embedded reinforcing bars 130 and the first through holes 250, and the embedded reinforcing bars 130 and the embedded rails 200-1 may be connected by the precast concrete member 110, and thus both the embedded reinforcing bars 130 and the embedded rails 200-1 may be integrally formed more robustly.

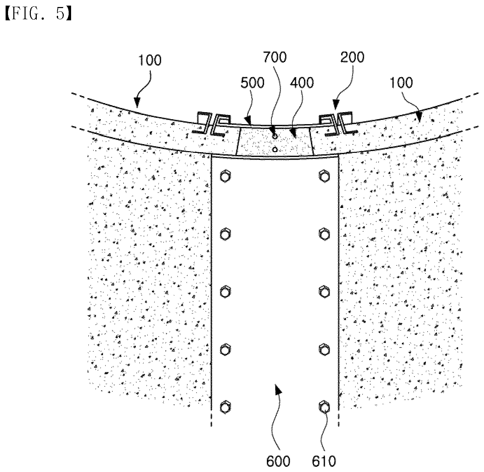

Referring to FIG. 5, the precast panel structure 10 may further include an inner cover portion 500 and an outer cover portion 600.

In detail, the precast panel structure 10 may further include the inner cover portion 500 installed in the insertion space portion 300 formed between the insertion rails 200 of each of the connected precast concrete panels 100 and provided to support an interior of the connecting part of the adjacent precast concrete panels 100, and the outer cover portion 600 fixed in the insertion holes 111 formed in the outer end areas of the precast concrete panels 100 by insertion bolts 610 and provided to support an exterior of the connecting part of the adjacent precast concrete panels 100.

The inner cover portion 500 may be a member serving as an inner form of the connecting part of the connected precast concrete panels 100, and the outer cover portion 600 may be a member serving as an outer form of the connecting part of the connected precast concrete panels 100.

The inner cover portion 500 and the outer cover portion 600 may be removed after the adjacent precast concrete panels 100 are integrally formed to be connected by the grout portion 400 cast in the connecting part of the precast concrete panels 100.

Merely, when the precast panel structure 10 further includes the inner cover portion 500 and the outer cover portion 600, the inner cover portion 500 and the outer cover portion 600 may remain even after the grout portion 400 is cast.

In this case, the precast concrete panels 100, connected by the grout portion 400, may be primarily integrally formed, and may be connected to overlap the inner cover portion 500 and the outer cover portion 600, while being secondarily integrally formed by the inner cover portion 500 and the outer cover portion 600, and thus the structural performance of the connecting part of the precast concrete panels 100 may be improved.

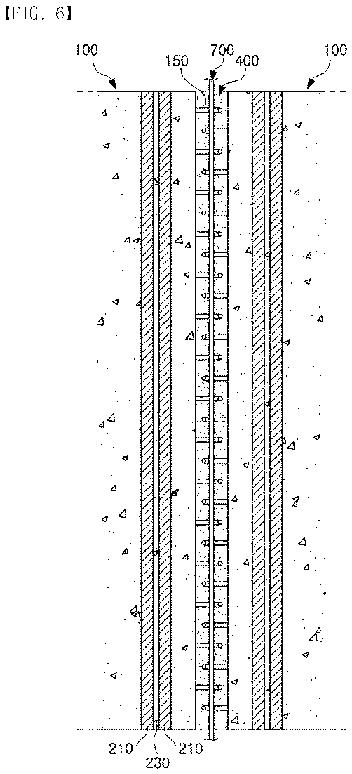

As illustrated in FIGS. 5 and 6, the precast panel structure 10 may further include connecting reinforcing bars 700 installed in the intersecting area of the exposed reinforcing bars 150 exposed to the connecting part of the adjacent precast concrete panels 100 in the height direction, and fixed to the exposed reinforcing bars 150.

Various types of connecting members K may be installed in the connecting space portion 230, and the connecting members K may include a hinge frame K1, a fixture K2, a lifting jig K3, and a metal connecting member K4. This will be described in more detail later.

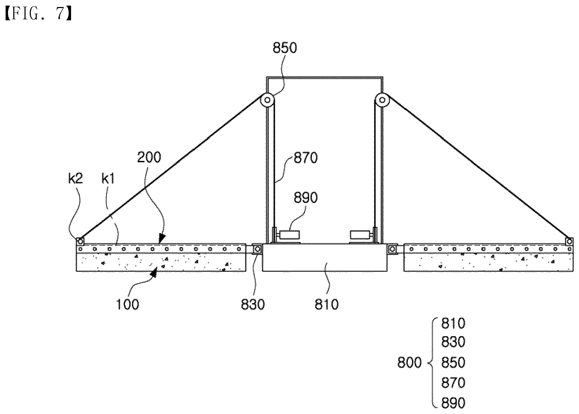

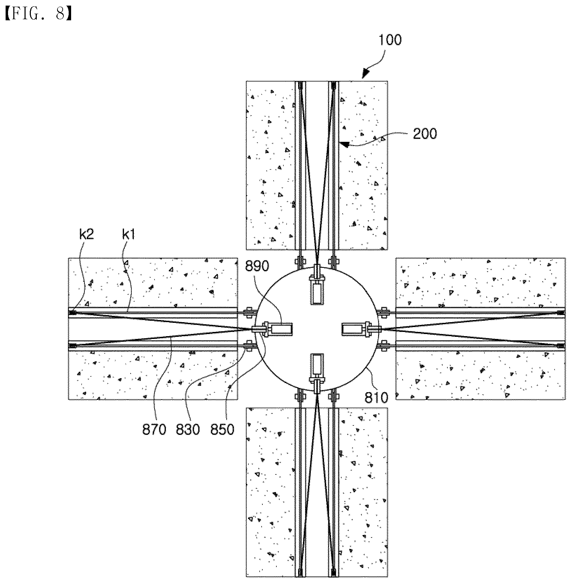

Referring to FIGS. 7 and 8, the hinge frame K1 may be a member inserted in the connecting space portion 230 formed between the pair of rail members 210 of the precast concrete panel 100, and a lower end of the hinge frame K1 may be hinge-coupled to a hinge member 830 installed on a lower end of a frame body 810 of an installation frame 800.

Referring to FIGS. 7 and 8, the fixture K2 may be a member installed on an upper end of each of the insertion rails 200 of the precast concrete panel 100, and one end of a tension member 870 of the installation frame 800 may be fixed to the fixture K2.

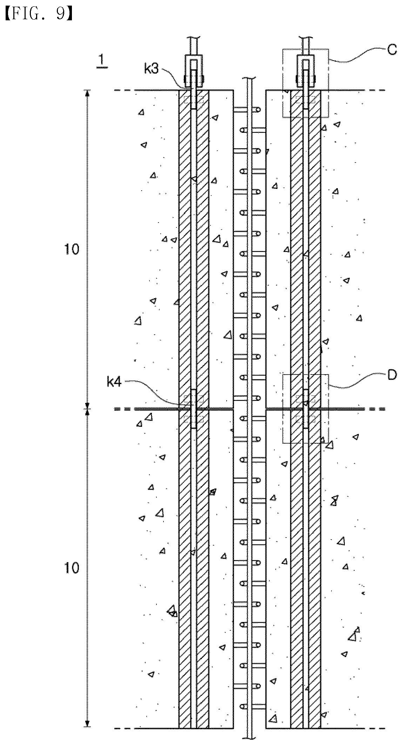

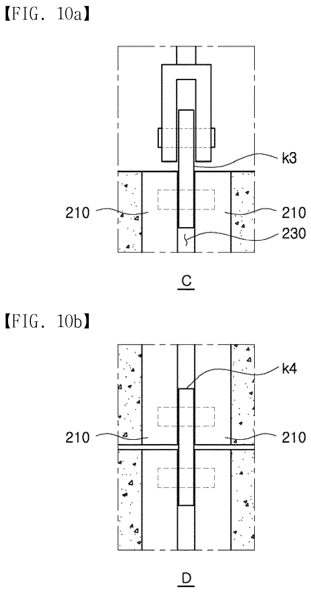

Referring to FIGS. 9 and 10A, the lifting jig K3 may be a member installed on the insertion rail 200 to lift the precast panel structure 10 using a crane, and may be installed in an insertion space portion 300 formed between a pair of rail members 210 of another precast panel structure 10 stacked on one precast panel structure 10.

Referring to FIGS. 9 and 10A, the metal connecting member K4 may be a member connecting the stacked precast panel structures 10 in the height direction, and may be installed in the insertion space portion 300 formed between the pair of rail members 210 of the stacked precast panel structures 10.

The metal connecting member K4 may be installed across lower sides of the insertion rails 200 of the other precast panel structure 10 disposed on the one precast panel structure 10 and upper sides of the insertion rails 200 of the one precast panel structure 10 disposed below the other precast panel structure 10.

With reference to FIGS. 9, 10A, and 10B, a precast tower structure 1, according to an exemplary embodiment in the present disclosure, will be described in detail.

The precast tower structure 1 may include the precast panel structure 10 and the metal connecting member K4.

As illustrated in FIG. 9, the precast tower structure 1 may include a plurality of precast panel structures 10 stacked in the height direction, and the metal connecting member K4 installed across the adjacent insertion rails 200 of the stacked precast panel structures 10 to connect the precast panel structures 10 in the height direction.

The metal connecting member K4 may be inserted between an upper end portion of the connecting space portion 230 formed between the pair of rail members 210 of the one precast panel structure 10 disposed below the other precast panel structure 10 and a lower end portion of the connecting space portion 230 formed between the pair of rail members 210 of the other precast panel structure 10 disposed above the one precast panel structure 10.

In a state in which the one precast panel structure 10 is disposed, the other precast panel structure 10 stacked on the one precast panel structure 10 may be lifted using the crane or the like.

As illustrated in FIG. 10A, in a state in which the lifting jig K3 is inserted into the insertion space portion 300 formed between the pair of rail members 210 of the other precast panel structure 10 stacked on the one precast panel structure 10, the bolt member may be fastened to the second through holes 270 formed in the rail members 210, such that the rail members 210 and the lifting jig K3 may be fixed.

A shackle may be installed on the lifting jig K3, and the tension member 870, connected to the shackle, may be lifted using the crane to stack the precast panel structure 10.

As illustrated in FIGS. 9 and 10B, the metal connecting member K4 may be a member connecting the lower sides of each of the insertion rails 200 of the other precast panel structure 10 disposed on the one precast panel structure 10 and the upper sides of each of the insertion rails 200 of the precast panel structure 10 disposed below the other precast panel structure 10.

In a state in which the metal connecting member K4 is inserted in the insertion space portion 300 formed between the pair of rail members 210 of the precast panel structure 10, the bolt member may be fastened to the second through holes 270 formed in the rail members 210, such that the rail members 210 and the metal connecting member K4 may be fixed.

FIG. 9 illustrates two precast panel structures 10 stacked in the height direction. However, three or more precast panel structures 10 may be stacked, according to desirable heights of a structure.

Hereinafter, a method for manufacturing the precast panel structure 10, according to an exemplary embodiment in the present disclosure, will be described in detail.

The method for manufacturing the precast panel structure 10 may be performed by connecting a plurality of precast concrete panels 100 each having sections split in the circumferential direction of the precast panel structure 10, in the circumferential direction of the precast concrete panels 100.

The method for manufacturing the precast panel structure 10 may include a panel placement step of placing the precast concrete panels 100 in the circumferential direction of the precast panel structure 10, a form installation step of installing forms on exteriors and interiors of the connecting parts of the connected precast concrete panels 100, a grout casting step of casting grout in the connecting parts, and a form detachment step of detaching the forms after the cast grout is bonded to the precast concrete panels 100.

The form installation step may include an inner form installation step of installing the inner cover portions 500, supporting the interiors of the connecting parts, on the insertion rails installed to be embedded in the inner end areas of the connected precast concrete panels 100, and an outer form installation step of installing the outer cover portions 600, supporting the exteriors of the connecting parts, by inserting the insertion bolts 610 in the insertion holes 111 formed in the outer end areas of the connected precast concrete panels 100.

The grout casting step may include curing the cast grout.

Referring to FIGS. 7 and 8, the panel placement step may include a frame installation step of placing the installation frame 800 inside the precast panel structure 10, a hinge coupling step of placing the lower ends of the precast concrete panels 100 on the hinge members 830, installed on the lower sides of the installation frame 800 to be spaced apart in the circumferential direction, through hinge coupling, and a panel standing step of standing the precast concrete panels 100 by winding the tension members 870 installed in conjunction with the precast concrete panels 100 and with the installation frame 800 using driving means 890.

The frame installation step may include placing the installation frame 800 inside the precast panel structure 10.

The hinge coupling step may include installing the hinge frames K1 on the insertion rails 200 of the precast concrete panels 100, coupling the lower ends of the hinge frames K1 to the hinge members 830 formed on the lower sides of the frame body 810 to be spaced apart in the circumferential direction, and placing the precast concrete panels 100 in a lying position in a circumferential direction of the frame body 810.

The panel standing step may include connecting one ends of the tension members 870 to the fixtures K2 installed on the upper ends of the insertion rails 200 of the precast concrete panels 100, and connecting the other ends of the tension members 870 to the driving means 890 of the installation frame 800 by pulley members 850.

The precast concrete panels 100 may be stood sequentially by winding the tension members 870, using the driving means 890, in a state in which the tension members 870 are connected to the fixtures K2 of the precast concrete panels 100 and to the driving means 890.

Intervals between the stood precast concrete panels 100 may be fixed using at least one of the inner cover portions 500 and the outer cover portions 600.

The precast concrete panels 100 may be fixed by inserting the inner cover portions 500 in the insertion space portions 300 of the adjacent precast concrete panels 100.

In a state in which the intervals between the adjacent precast concrete panels 100 are maintained using the inner cover portions 500, the outer cover portions 600 may be installed by inserting the insertion bolts 610 in the insertion holes 111 formed in the outer end areas of the precast concrete panels 100.

The installation frame 800, used in the method for manufacturing the precast panel structure 10, may include the frame body 810, the hinge members 830, the pulley members 850, the tension members 870, and the driving means 890.

The installation frame 800 may include the frame body 810, the hinge members 830 installed on the lower sides of the frame body 810 to be spaced apart in the circumferential direction, and having the lower ends of the precast concrete panels 100 hinge-coupled thereto, the pulley members 850 installed on the upper sides of the frame body 810, the tension members 870 having the one ends installed in conjunction with the precast concrete panels 100, and the other ends installed on the installation frame 800 by the pulley members 850, and the driving means 890 lifting the precast concrete panels 100 by winding the tension members 870.

While exemplary embodiments have been shown and described above, it will be apparent to those skilled in the art that modifications and variations could be made without departing from the scope of the present disclosure as defined by the appended claims.

### [Industrial Applicability]

As described above, a precast panel structure, according to an exemplary embodiment in the present disclosure, may be configured such that precast concrete panels may be easily connected in a circumferential direction and a length direction thereof to improve constructability, thus reducing the construction period and construction costs.

## Claims

1. A precast panel structure, formed by connecting a plurality of precast concrete panels in a circumferential direction of the precast panel structure, comprising:
the precast concrete panels each having sections split in the circumferential direction thereof;
insertion rails installed in inner end areas of each of the precast concrete panels in a height direction of each of the precast concrete panels, wherein portions of the insertion rails are embedded in the precast concrete panel;
grout portions cast in connecting parts of the precast concrete panels so as to connect the precast concrete panels; and
insertion space portions provided to be surrounded by the inner end areas of the precast concrete panels and by the insertion rails, to provide spaces in which inner cover portions for casting the grout portions are installed.

2. The precast panel structure of claim 1, wherein the precast concrete panels include:
precast concrete members each having sections split in the circumferential direction thereof;
embedded reinforcing bars embedded inside the precast concrete members; and
exposed reinforcing bars formed by portions of the embedded reinforcing bars exposed to the connecting parts of the precast concrete panels,
wherein the precast concrete panel further includes: connecting reinforcing bars installed in intersecting areas of the exposed reinforcing bars exposed to the connecting parts of the adjacent precast concrete panels in the height direction, and fixed to the exposed reinforcing bars.

3. The precast panel structure of claim 1, wherein each of the insertion rails includes:
a pair of rail members each having an upper flange, a web, and a lower flange, and each having a U-shaped section; and
a connecting space portion by which the pair of rail members are spaced apart by a predetermined interval, such that a connecting member is installed in the connecting space portion,
wherein each of the pair of rail members includes:
an embedded rail having the upper flange and a portion of the web embedded in each of the precast concrete panels; and
an exposed rail having the lower flange and a remainder of the web exposed from each of the precast concrete panels.

4. The precast panel structure of claim 3, configured to have through holes formed in the embedded rail and the exposed rail forming each of the insertion rails, the through holes being spaced apart in the height direction.

5. The precast panel structure of claim 3, wherein each of the insertion rails includes:
a first through hole formed in the portion of the web included in the embedded rail, wherein an embedded reinforcing bar, installed inside each of the precast concrete panels, is installed through the first through hole; and
a second through hole formed in the remainder of the web included in the exposed rail, wherein a fastening member, fastening the connecting member installed in conjunction with the exposed rail, is installed through the second through hole.

6. The precast panel structure of claim 1, wherein insertion holes, spaced apart in the height direction, are formed in outer end areas of the precast concrete panels.

7. The precast panel structure of claim 1, further comprising:
inner cover portions installed in the insertion space portions formed between the insertion rails of the connected precast concrete panels, and provided to support interiors of the connecting parts of the adjacent precast concrete panels; and
outer cover portions fixed in insertion holes formed in outer end areas of the connected precast concrete panels by insertion bolts, and provided to support exteriors of the connecting parts of the precast concrete panels.

8. A precast tower structure comprising:
the precast panel structure of any one of claims 1 to 7 provided as a plurality of precast panel structures stacked in a height direction; and
metal connecting members installed across the adjacent insertion rails of the stacked precast panel structures to connect the precast panel structures in the height direction.

9. A method for manufacturing a precast panel structure formed by connecting a plurality of precast concrete panels, having sections split in a circumferential direction of the precast panel structure, in a circumferential direction of the precast concrete panels, comprising:
a panel placement step of placing the precast concrete panels in the circumferential direction of the precast panel structure;
a form installation step of installing forms on exteriors and interiors of connecting parts of the connected precast concrete panels;
a grout casting step of casting grout in the connecting parts; and
a form detachment step of detaching the forms after the cast grout is bonded to the precast concrete panels,
wherein the form installation step includes:
an inner form installation step of installing inner cover portions, supporting the interiors of the connecting parts, on insertion rails installed to be embedded in inner end areas of the connected precast concrete panels; and
an outer form installation step of installing outer cover portions, supporting the exteriors of the connecting parts, by inserting insertion bolts in insertion holes formed in outer end areas of the connected precast concrete panels.

10. The method of claim 9, wherein the panel placement step includes:
a frame installation step of placing an installation frame inside the precast panel structure;
a hinge coupling step of placing lower ends of the precast concrete panels on hinge members through hinge coupling, wherein the hinge members are installed on lower sides of the installation frame to be spaced apart in the circumferential direction; and
a panel standing step of standing the precast concrete panels by winding tension members, installed in conjunction with the precast concrete panels and the installation frame, using driving means.

11. The method of claim 10, wherein the installation frame includes:
a frame body;
the hinge members installed on the lower sides of the frame body to be spaced apart in the circumferential direction, wherein the lower ends of the precast concrete panels are hinge-coupled to the hinge members;
pulley members installed on upper sides of the frame body;
the tension members having one ends installed in conjunction with the precast concrete panels, and the other ends installed on the installation frame by the pulley members; and
the driving means lifting the precast concrete panels by winding the tension members.
